# EUROPÄISCHE PATENTSCHRIFT

(11) **EP 0 562 291 B1**
(45) Veröffentlichungstag und Bekanntmachung des Hinweises auf die Patenterteilung: **05.06.1996**
(21) Anmeldenummer: 93102810.4
(22) Anmeldetag: 24.02.1993
(51) Int. Cl.: F16H 15/28

(54) **Reibgetriebe**
Friction transmission
Transmission par friction

(30) Priorität: 21.03.1992 DE 4209229
(43) Veröffentlichungstag der Anmeldung: 29.09.1993
(73) Patentinhaber: Heidolph-Elektro GmbH & Co. KG, D-93309 Kelheim (DE)
(72) Erfinder: Vollgold, Günter, W-8540 Rednitzhembach (DE)
(74) Vertreter: Göbel, Matthias, Dipl.-Ing.

(56) Entgegenhaltungen:
- DE-A- 2 358 373
- DE-A- 3 234 358
- DE-B- 1 208 142
- FR-A- 1 303 145

## Beschreibung

Die Erfindung betrifft ein Reibgetriebe zum Übertragen einer Drehbewegung, insbesondere für Laborgeräte, z.B. Laborrührwerke, mit einer zwischen einem Motorritzel od. dgl. und einem Abtriebsrad auf einer Drehachse zentrisch angeordneten Reibkugel aus einem federnd elastischen Werkstoff, wobei mittels eines Stellgliedes Verschwenkungen der Reibkugel zur stufenlosen Veränderung der Übersetzung erzielt werden, und wobei ein Ein-/Ausschalter und Mittel vorgesehen sind, die nach Abschalten eines Getriebemotors die Reibkugel vom Motorritzel und vom Abtriebsrad abheben.

Beim gattungsgleichen Reibgetriebe der DE-B-12 08 142 ist es bekannt, den Nachteil von punktförmigen Druckbeanspruchungen von Reibkugel und Getrieberädern während des Stillstands des Getriebes durch Abheben der Reibkugel von den Getrieberädern zu vermeiden. Die Reibkugel ist hierzu über einen Exzentertrieb in umständlicher Weise von den Getrieberädern entfernbar. Abgesehen davon, daß der Exzentertrieb bauaufwendig ist, werden beim bekannten Getriebe für das Ein-/Ausschalten des Getriebemotors auch weitere Schaltmittel erforderlich.

Es ist Aufgabe der Erfindung einfache Maßnahmen zum sicheren Freihalten der Reibkugel von störenden Verformungen bei Stillstandzeiten und zur Beeinflussung des Getriebemotors zu Stillstandzeiten schaffen.

Der Erfindung gemäß ist diese Aufgabe dadurch gelöst, daß die Mittel zum Abheben der Reibkugel ein weiteres Stellglied umfassen, das verschiebbar im Getriebegehäuse ausgebildet ist, wobei das weitere Stellglied mit dem Ein-/Ausschalter, mit einer Feder, durch deren Federkraft die Reibkugel an das Motorritzel und das Abtriebsrad anlegbar ist, und der Reibkugel derart gekoppelt ist, daß das weitere Stellglied in "Aus"-Stellung die Reibkugel von Motorritzel und Abtriebsrad entgegen der Federkraft abhebt. Auf diese Weise ist erreicht, daß durch einen einfachen Verschiebevorgang des weiteren Stellgliedes die Reibkugel und der Ein-/Ausschalter für den Getriebemotor gleichzeitig im Sinne von Stillstand beeinflußbar sind, um so Verformungen der Reibkugel durch Anpreßdrukke und unerwünschte Umläufe des Getriebemotors zu verhindern.

In Ausgestaltung des Reibgetriebes ist vorgesehen, daß die Reibkugel drehbar auf einem Träger aufgesetzt ist, der mittels eines Bolzens ober einer Anformung im Getriebegehäuse mit Spiel abgestützt ist und mittels eines weiteren achsgleichen Bolzens oder Anformung an dem weiteren Stellglied für den Ein-/Ausschalter gelagert ist und daß im Abstand neben dem letztgenannten Bolzen oder der Anformung das Stellglied zum Einregeln von Übersetzungsänderungen am Träger angelenkt ist. Fernerhin kann die Reibkugel drehbar auf einem Träger aufgesetzt sein, der mit Spiel am Stellglied zum Einregeln von Übersetzungsänderungen und am weiteren Stellglied für den Ein/Ausschalter mittels Bolzen oder Anformungen gestützt ist.

Schließlich ist noch vorgesehen, daß die Feder durch eine Schraubenfeder gebildet ist, die zwischen dem Bolzen oder der Anformung und dem Getriebegehäuse eingespannt ist und somit den Träger der Reibkugel am weiteren Stellglied fixiert. Bevorzugt können die Stellglieder durch Hebelgetriebe oder Schieber gebildet und über Schraubgewinde durch drehbare Betätigungsglieder längsverstellbar und fixierbar sein.

Die Erfindung ist anhand eines Ausführungsbeispiels in der Zeichnung verdeutlicht. Hierin zeigen:
- Fig. 1: ein Reibgetriebe in Draufsicht, teilweise im Schnitt,
- Fig. 2: ein Reibgetriebe gemäß Fig. 1 in Seitenansicht,
- Fig. 3: ein Reibgetriebe gemäß Fig. 1 in einer Schwenkstellung der Reibkugel, in Draufsicht,
- Fig. 4: ein Reibgetriebe mit in verschiedenen Schwenkstellungen befindlicher Reibkugel in Seitenansicht und
- Fig. 5: ein Reibgetriebe gemäß Fig. 1 mit Getriebemotor in Draufsicht.

In den Fig. ist mit 1 eine Reibkugel aus einem federnd elastischen Werkstoff, z.B. Kunststoff, Gummi od.dgl. bezeichnet, die als Zwischenglied zwischen einem vom Getriebemotor 2 drehbaren Ritzel 3 und einem im Getriebegehäuse 19 drehbar ausgebildeten Antriebsrad 4 angeordnet ist. Auf der Welle 4' des Getrieberades 4 ist ein weiteres Ritzel 5 fest aufgebracht, das mit einem Getrieberad 6 in Eingriff steht, das z.B. über eine Welle 6' mit einem Rührflügel (nicht gezeigt) kraftschlüssig verbunden ist. Beim Ausführungsbeispiel ist die Reibkugel 1 auf einem Träger 7 drehbeweglich aufgesetzt, der durch Bolzen 8,9 lagerbar ist, wobei die Lagerung des Bolzens 8 im Getriebegehäuse 19 mit Spiel und die Lagerung des Bolzens 9 in einem schwenk- und verschiebbaren Stellglied 10 vorgesehen ist, das der Betätigung eines Ein-/Ausschalters 11 dient. Ein weiteres schwenk- und verschiebbares Stellglied 12 ist am Träger 7 bei 13 im Abstand des Bolzen 8 angelenkt und ermöglicht bei seinen Betätigungen Abschwenkungen der Reibkugel 1 zu Übersetzungsänderungen zwischen Ritzel 3 und Getrieberad 4. Die Stellglieder 10,12 sind über Schraubgewinde (nicht gezeigt) mit Betätigungsgliedern 14,15 gekoppelt. Zur Stützung des Bolzens 9 im Stellglied 12 taucht der Bolzen 9 in eine Ausnehmung 16 ein und ist in dieser durch ein Federelement, z.B. Schraubenfeder 17, fixiert.

Es versteht sich, daß abweichend der Träger 7 für die Reibkugel 1 auch anderweitig, z.B. auf den beiden Stellgliedern 10,12 gelagert sein.

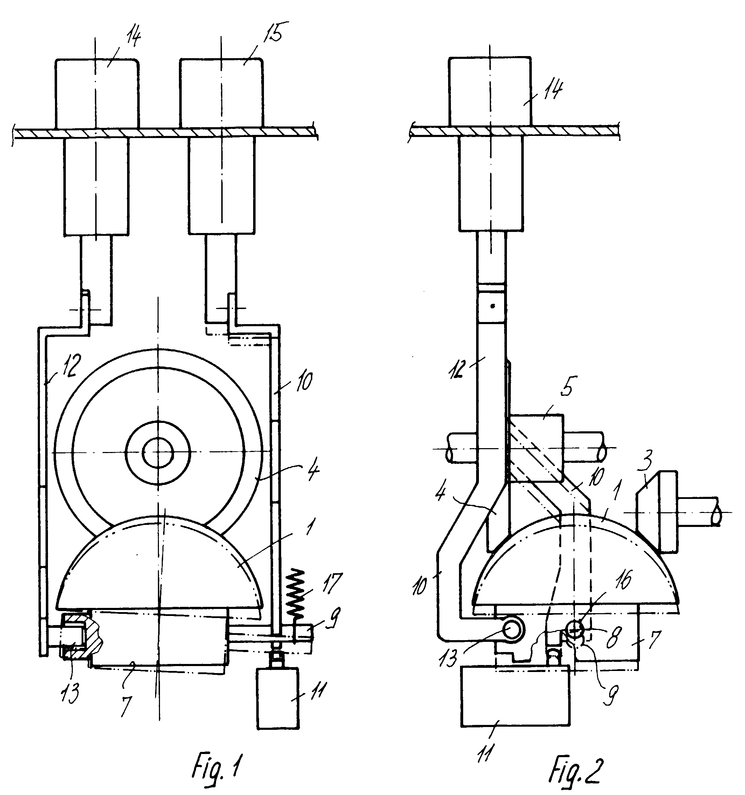

In Fig 1 und 2 nimmt der Ein-/Ausschalter 11 für den Getriebemotor 2 die voll gezeichnete Stellung "Ein" ein. In dieser Stellung legt das Ritzel 3 ein Drehmoment auf die Reibkugel 1 das auf das zugeordnete Getrieberad 5 übertragen wird. Bei Bewegungen des Stellgliedes 10 in Richtung auf den Ein-/Ausschalter 11 (strichpunktierte Stellung), in die Stellung "Aus" des Ein-/Ausschalters 11 wird gleichzeitig entgegen der Vorspannung der Schraubenfeder 17 der Bolzen 9 und der Träger 7 in die strichpunktierte Stellung verbracht und die Reibkugel 1 von Ritzel 3 und Getrieberad 4 abgehoben. Die Lagerung des Bolzens 8 mit Spiel erlaubt diese Abhebungen der Reibkugel.

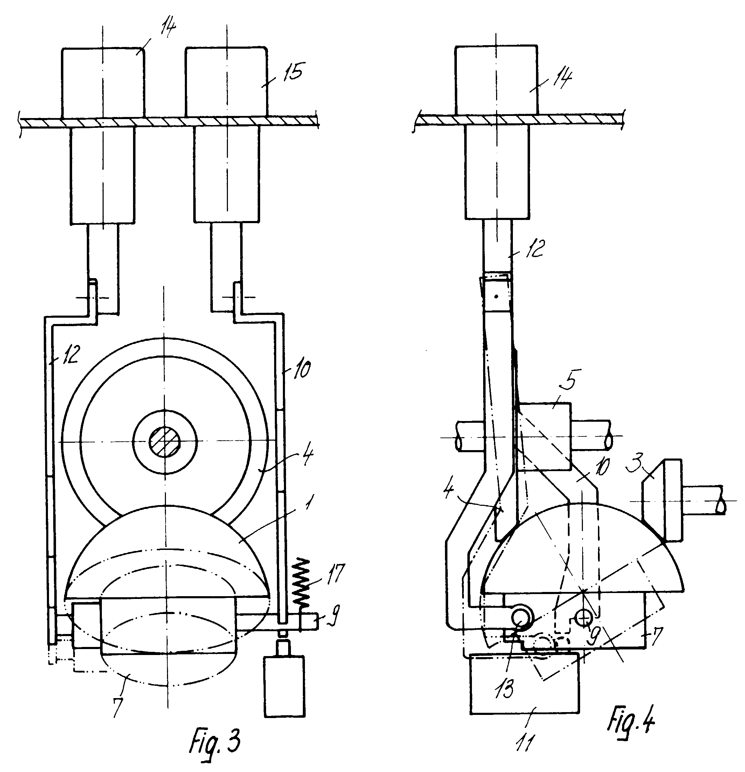

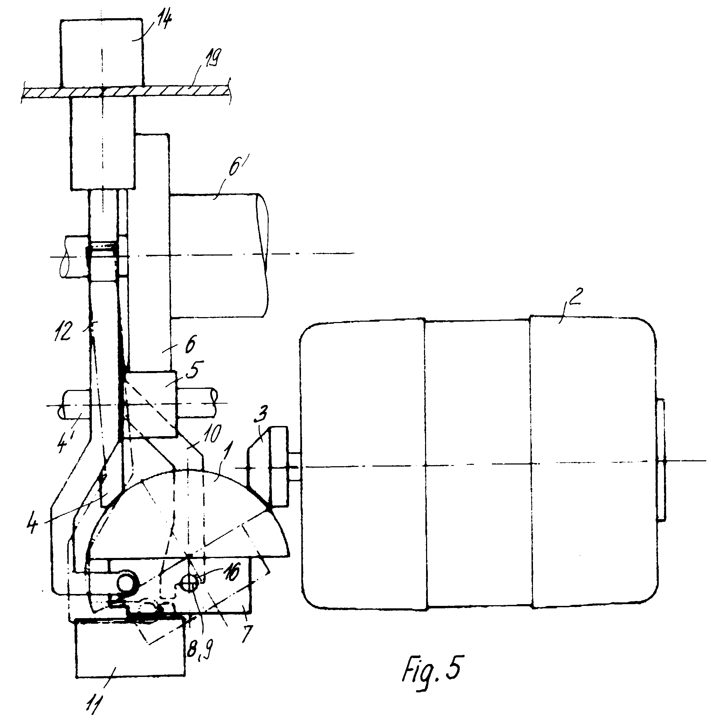

Bei Verschiebebewegungen des Stellgliedes 12 (Fig. 4,5) sind Abschwenkungen des Trägers 7 mitsamt der Reibkugel 1 aus den voll gezeichneten in die strichpunktierten Stellungen und umgekehrt zu Übersetzungsänderungen möglich.

## Patentansprüche

1. Reibgetriebe zum Übertragen einer Drehbewegung, insbesondere für Laborgeräte, z.B. Laborrührwerke, mit einer zwischen einem Motorritzel (3) od.dgl. und einem Abtriebsrad (4) auf einer Drehachse zentrisch angeordneten Reibkugel (1) aus einem federnd elastischen Werkstoff, wobei mittels eines Stellgliedes (12) Verschwenkungen der Reibkugel (1) zur stufenlosen Veränderung der Übersetzung erzielt werden, und wobei ein Ein-/Ausschalter (11) und Mittel vorgesehen sind, die nach Abschalten eines Getriebemotors die Reibkugel vom Motorritzel und vom Abtriebsrad abheben,
dadurch gekennzeichnet,
daß die Mittel zum Abheben der Reibkugel (1) ein weiteres Stellglied (10) umfassen, das verschiebbar im Getriebegehäuse (19) ausgebildet ist, wobei das weitere Stellglied (10) mit dem Ein-/Ausschalter (11), mit einer Feder (17), durch deren Federkraft die Reibkugel (1) an das Motorritzel (3) und das Abtriebsrad (4) anlegbar ist, und der Reibkugel derart gekoppelt ist, daß das weitere Stellglied (10) in "Aus"-Stellung die Reibkugel (1) von Motorritzel (3) und Abtriebsrad (4) entgegen der Federkraft abhebt.

2. Reibgetriebe nach Anspruch 1, dadurch gekennzeichnet, daß die Reibkugel (1) drehbar auf einem Träger (7) aufgesetzt ist, der mittels eines Bolzens (8) oder einer Anformung im Getriebegehäuse (19) mit Spiel abgestützt ist und mittels eines weiteren achsgleichen Bolzens (9) oder Anformung an dem weiterem Stellglied (10) für den Ein-/Ausschalter (11) gelagert ist und daß im Abstand neben dem Bolzen (8) oder der Anformung das Stellglied (12) zum Einregeln von Übersetzungsänderungen am Träger (7) angelenkt ist.

3. Reibgetriebe nach Anspruch 1, dadurch gekennzeichnet, daß die Reibkugel (1) drehbar auf einem Träger (7) aufgesetzt ist und daß der Träger (7) mit Spiel am Stellglied (12) zum Einregeln der Übersetzungsänderungen und am weiteren Stellglied (10) für den Ein-/Ausschalter (11) mittels Bolzen (8,9) oder Anformungen gestützt ist.

4. Reibgetriebe nach einem der vorangegangenen Ansprüche, dadurch gekennzeichnet, daß die Feder eine Schraubenfeder (17) ist, die zwischen dem Bolzen (9) oder der Anformung und dem Getriebegehäuse (19) eingespannt ist und somit den Träger (7) der Reibkugel (1) am weiteren Stellglied (10) fixiert.

5. Reibgetriebe nach Anspruch 1, dadurch gekennzeichnet, daß die Stellglieder (10, 12) durch Hebelgetriebe oder Schieber gebildet und über Schraubgewinde durch drehbare Betätigungsglieder (14,15) längsverstellbar und fixierbar sind.

## Claims

1. Friction drive for transmitting a rotary movement, more especially for laboratory equipment, e.g. laboratory agitators, having a friction ball (1), which is centrally disposed on a rotary axis between a motor pinion (3) or the like and a driven wheel (4) and is formed from a resiliently elastic material, pivotal movements of the friction ball (1) being achieved by means of an adjusting member (12) for the stepless changing of the transmission, and an on/off switch (11) and means being provided, which means raise the friction ball from the motor pinion and from the driven wheel after a drive motor has been switched-off, characterised in that the means for raising the friction ball (1) include an additional adjusting member (1), which is displaceably provided in the drive housing (19), the additional adjusting member (10) being coupled to the on/off switch (11), to a spring (17) by means of the spring force of which the friction ball (1) can be fitted onto the motor pinion (3) and the driven wheel (4), and to the friction ball in such a manner that the additional adjusting member (10) in the "off" position raises the friction ball (1) from the motor pinion (3) and driven wheel (4) in opposition to the spring force.

2. Friction drive according to claim 1, characterised in that the friction ball (1) is rotatably placed on a carrier (7), which is supported with some clearance in the drive housing (19) by means of a bolt (8) or a projection and is mounted on the additional adjusting member (10) for the on/off switch (11) by means of an additional coaxial bolt (9) or projection, and in that the adjusting member (12) is pivotally mounted on the carrier (7) at a spacing from and adjacent the bolt (8) or the projection for regulating changes in transmission.

3. Friction drive according to claim 1, characterised in that the friction ball (1) is rotatably placed on a carrier (7), and in that the carrier (7) is supported with some clearance on the adjusting member (12) for regulating the changes in transmission and on the additional adjusting member (10) for the on/off switch (11) by means of bolts (8, 9) or projections.

4. Friction drive according to one of the preceding claims, characterised in that the spring is a helical spring (17), which is clamped in position between the bot (9) or the projection and the drive housing (19) and, hence, secures the carrier (7) of the friction ball (1) on the additional adjusting member (10).

5. Friction drive according to claim 1, characterised in that the adjusting members (10, 12) are formed by lever-type drives or slide valves and are longitudinally adjustable and securable via screw threads by means of rotatable actuating members (14, 15).

## Revendications

1. Engrenage à friction pour la transmission d'un mouvement de rotation, en particulier pour des appareils de laboratoire, par exemple des mélangeurs de laboratoire, comportant une boule de friction (1) agencée centralement sur un axe de rotation, entre un pignon de moteur (3) ou analogue et une roue menée (4), et réalisée en un matériau élastique, des pivotements de la boule de friction (1) pour une modification continue de la transmission étant obtenus au moyen d'un organe de réglage (12), et un basculeur (11) et des moyens étant prévus pour enlever la boule de friction du pignon de moteur et de la roue menée après la mise hors service d'un moto-réducteur,
caractérisé en ce que les moyens pour enlever la boule de friction (1) comprennent un organe de réglage supplémentaire (10) qui est formé de façon coulissante dans le boîtier d'engrenage (19), l'organe de réglage supplémentaire (10) étant couplé au basculeur (11), à un ressort (17), par la force élastique duquel la boule de friction (1) peut être mise au contact du pignon de moteur (3) et de la roue menée (4), et à la boule de friction de sorte que l'organe de réglage supplémentaire (10) enlève, dans la position "hors service", la boule de friction (1) du pignon de moteur (3) et de la roue menée (4), contre la force élastique.

2. Engrenage à friction selon la revendication 1,
caractérisé en ce que la boule de friction (1) est montée de façon rotative sur un support (7) qui prend appui, avec du jeu, au moyen d'un tourillon (8) ou d'une saillie, dans le boîtier d'engrenage (19), et qui est monté au moyen d'un tourillon coaxial supplémentaire (9) ou d'une saillie sur l'organe de réglage supplémentaire (10) pour le basculeur (11), et en ce que l'organe de réglage (12) est articulé sur le support (7), de façon écartée, à côté du tourillon (8) ou de la saillie, pour le réglage de modifications de la transmission.

3. Engrenage à friction selon la revendication 1,
caractérisé en ce que la boule de friction (1) est montée de façon rotative sur un support (7), et en ce que le support (7) prend appui, avec du jeu, sur l'organe de réglage (12) pour régler des modifications de la transmission, et sur l'organe de réglage supplémentaire (10) pour le basculeur (11) au moyen de tourillons (8,9) ou de saillies.

4. Engrenage à friction selon l'une des revendications précédentes,
caractérisé en ce que le ressort est un ressort cylindrique (17) qui est contraint entre le tourillon (9) ou la saillie et le boîtier d'engrenage (19), et fixe ainsi le support (7) de la boule de friction (1) sur l'organe de réglage supplémentaire (10).

5. Engrenage à friction selon la revendication 1,
caractérisé en ce que les organes de réglage (10,12) sont formés par des engrenages à levier ou des coulisseaux, et peuvent être réglés longitudinalement et fixés par l'intermédiaire de filetages, par des organes d'actionnement rotatifs (14,15).
